# EUROPEAN PATENT SPECIFICATION

(11) **EP 2 165 947 B1**
(45) Date of publication and mention of the grant of the patent: **22.02.2012**
(21) Application number: 09275083.5
(22) Date of filing: 18.09.2009
(51) Int. Cl.: B65G 13/12, B65G 67/20

(54) **Rollerbed**
Rollenbett
Lit formé de cylindres

(30) Priority: 18.09.2008 GB 0817139
(43) Date of publication of application: 24.03.2010
(73) Proprietor: Joloda International Ltd, Garston, Liverpool L19 2NY (GB)
(72) Inventor: Kordel, Wojtek, Liverpool, L19 2NY (GB); Irwin, Robert, Liverpool, L19 2NY (GB)
(74) Representative: Exell, Jonathan Mark

(56) References cited:
- FR-A1- 2 565 565
- GB-B- 2 378 692

## Description

### Field of the Invention

The present invention relates to rollerbeds (which are also known as rollerbed conveyors). In particular the present invention relates to a rollerbed suitable for retrofitting into vehicles such as vans.

### Background to the Invention

Rollerbeds are known for material handling in vehicles such as lorries or aircraft. Such rollerbeds are installed into the vehicle during the manufacture of the vehicle.

GB 2378692 shows an example of a double rollerbed, having two rollers per axle. The present invention relates both to single rollerbeds, having a single roller per axle, and to multiple rollerbeds. Another rollerbed is disclosed in FR-A-2565 565.

### Statement of Invention

According to an aspect of the present invention, there is provided a rollerbed as claimed in claim 1. A method for fitting a rollerbed to a vehicle is another aspect of the present invention as claimed in claim 15.

The present invention seeks to provide a rollerbed that can be readily and easily installed into a vehicle such as a van after manufacture of the vehicle. Vans are typically sold with a flat cargo bay and it would be desirable to be able to conveniently retrofit a rollerbed to a van, thereby improving the ease by which goods such as pallets can be loaded into, and out of, the van. Preferably, the rollerbed conveyors are non-powered.

The rollerbed of embodiments of the present invention has the advantage that the flat panel provides a surface for supporting pallets, without requiring a lower floor. The C sections increase the rigidity of the flat panel. The rollerbed conveyors are attached to the panel and further increase the rigidity of the flat panel.

A preferred embodiment further comprises pneumatic reservoirs located within "top-hat" sections.

### Brief Description of drawings

Embodiments of the present invention will now be described in detail, by way of example only, with reference to the accompanying drawings in which:
Figure 1 shows a view looking down into a van incorporating an embodiment of the present invention (the roof of the van is, for convenience, transparent).
Figure 2 shows a master rollerbed and a slave rollerbed of Figure 1.
Figures 3a and 3b show cross-sectional views of Figure 2 in the plane 3-3, with rollers in a lowered position.
Figures 4a and 4b show the same views as Figures 3a and 3b but with the rollers in a raised position.
Figure 5 shows a partial cross-sectional view of Figure 2 in the plane 5-5.
Figure 6a, 6b and 6c show the same view as Figure 5 but with a pallet.
Figure 7 shows a schematic diagram of a pneumatic system.
Figure 8a illustrates a fully loaded vehicle incorporating an embodiment of the present invention. Figures 8b and 8c show the vehicle during the loading process.

### Detailed Description

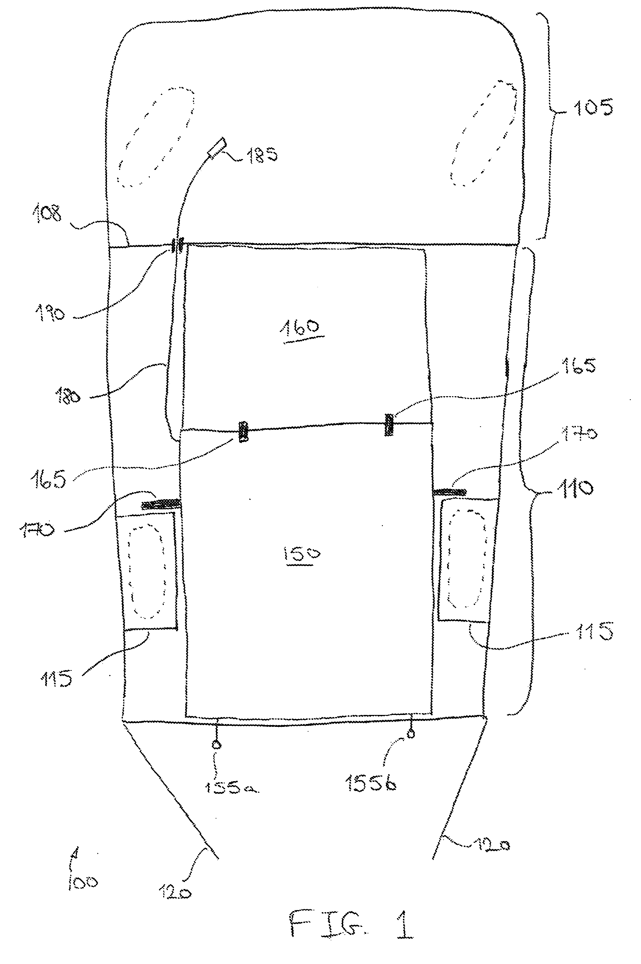

Figure 1 shows a view looking down into a van 100 (the roof of the van 100 is, for convenience, transparent). The front of the van 100 has a cab 105 for the driver. Separated from the cab 105 by a bulkhead 108 is the rear 110 of the van 100. The rear 110 forms a cargo carrying portion of the van 100. Within the rear 110 are two wheel wells 115, one for each of the two rear wheels of the van 100. At the back of the van 100 are two doors 120 which provide access to the rear 110 of the van 100.

A master rollerbed 150 according to an embodiment of the present invention is provided with rollerbed conveyors (not shown in Figure 1). Push/pull valves 155a, 155b are used by an operator to raise and lower the rollerbed conveyors. The master rollerbed 150 is joined to a slave rollerbed 160 (which has two separate sets of rollerbed conveyors, not shown in Figure 1) by couplers 165. The couplers 165 allow the master rollerbed 150 to be mechanically releasably coupled to the slave rollerbed 160. In this embodiment the couplers 165 are based on toggles though other arrangements such as screw threads and nuts may be used in other embodiments. It will also be appreciated that actuators differeing from the push/pull valves 155a, 155b could be used.

The master rollerbed 150 is provided with releasable restraining pins 170. In the illustrated embodiment, the restraining pins 170 are located near the wheel wells 115 (it is preferred that the master rollerbed 150 is provided with a variety of locations into which the pins 170 may be inserted so that, for a van 100 of a given size, the pins 170 can be located as near as practicable to the wheel wells 115). In this embodiment the pins 170 comprise a threaded shank that is screwed into the master 150; in this embodiment the master 170 is provided with a plurality of threaded holes (not shown) to receive the pins 170. In other embodiments, the pins 170 may engage with some part of the van 100 other than the wheel wells 115. It will be appreciated that other mounting arrangements could be used to mount the rollerbed to the vehicle.

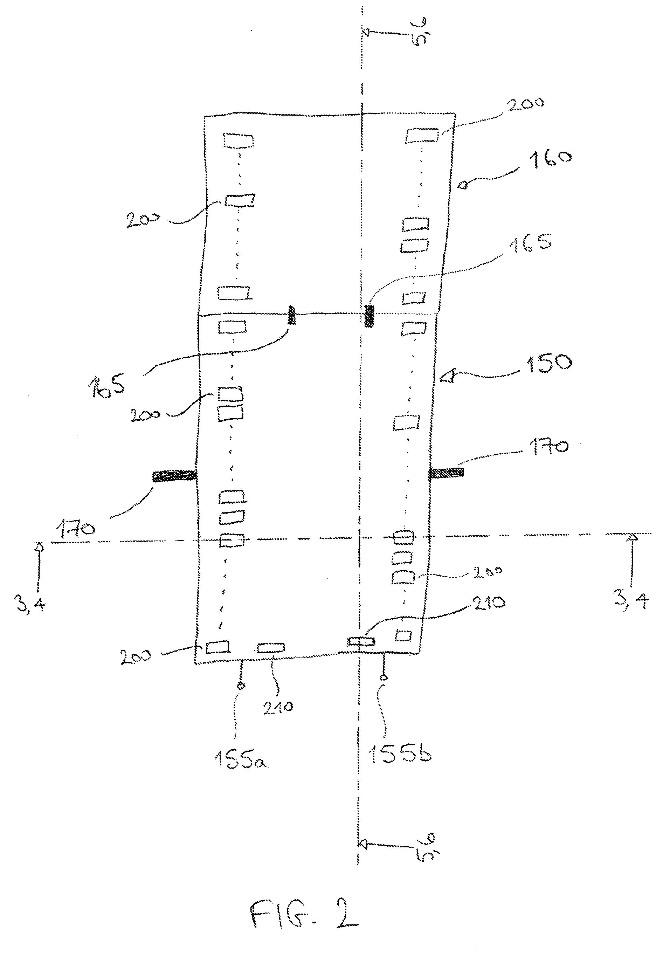

The pins 170 provide a restraining mechanism for preventing excessive movement (for example during acceleration, braking or cornering of the van 100) of the master rollerbed 150 and slave rollerbed 160 relative to the van 100. Preferably, the master rollerbed 150 and slave rollerbed 160 shouldnot move forwards relative to the van 100 or the slave rollerbed 160 will come into contact with the bulkhead 108. Similarly, the master 10 and slave 160 ahould preferably not move backwards relative to the van 100 or the pins 170 will come into contact with the wheel wells 115. Although the pins 170 are shown in Figure 2 as being generally cylindrical, in other embodiments the pins may be of different size and shape. For example, each pin 170 could be secured at two places to the master rollerbed 150; for convenience they are nonetheless referred to as pins.

Sideways movement of the master rollerbed 150 and slave rollerbed 160 relative to the van 100 is prevented by making the width of the master rollerbed 150 and slave rollerbed 160 only a little less than the spacing between the wheel wells 115. Most light duty vans have a spacing between their rear wheel wells of 1300 mm and in this embodiment the width of the master rollerbed 150, and of the slave rollerbed 160, is 1260 mm. Alternatively, additional mounting pins or other devices could be used to restrain the rollerbed.

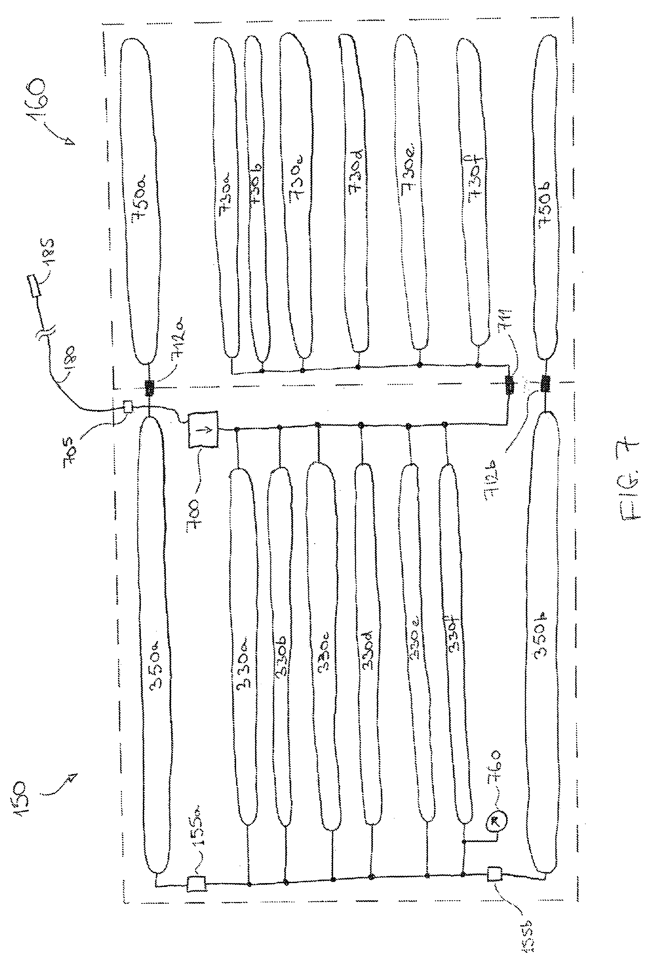

The master rollerbed 150 has a power lead 180 and a connector 185 that, in this embodiment, are used to electrically connect a compressor (discussed further in connection with Figure 7) to an accessory outlet such as a cigarette lighter within the cab 105. If necessary, a hole 190 may be drilled thought the bulkhead to allow the connector 185 to pass from the rear 110 of the van 100 to the cab 105.

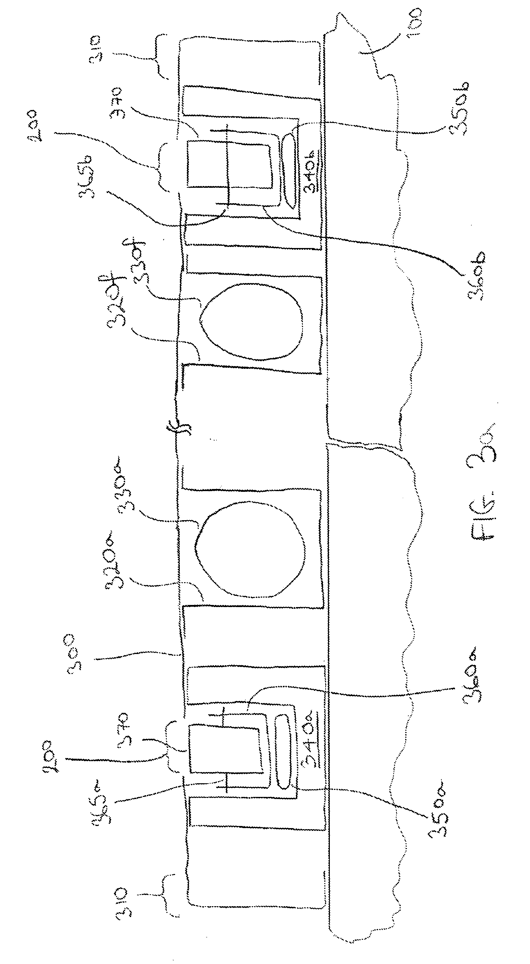

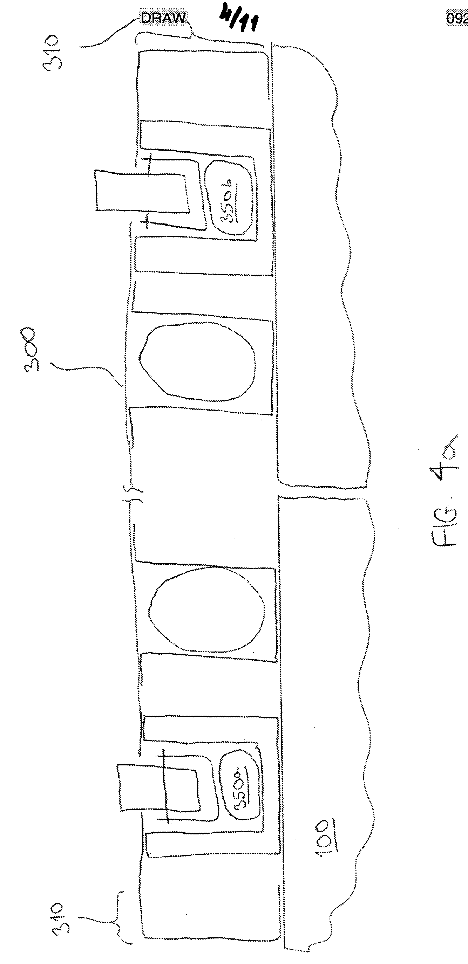

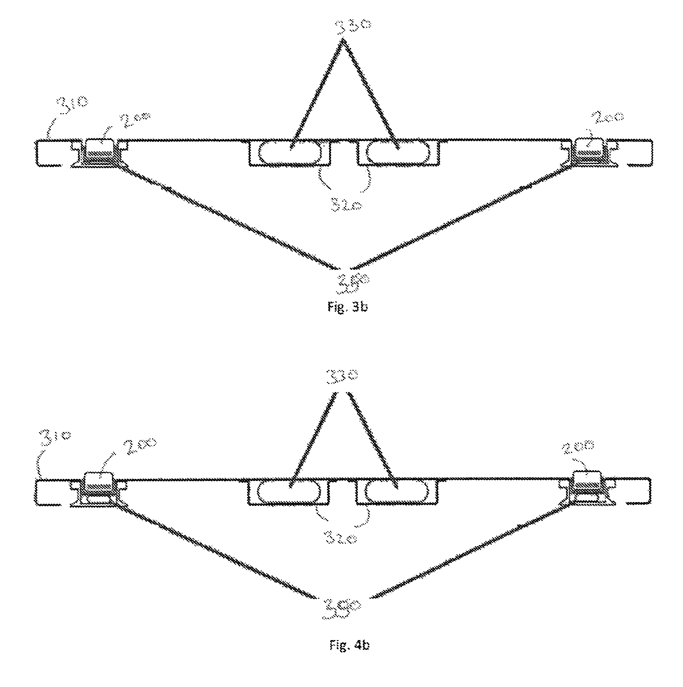

Figure 2 shows the master rollerbed 150 and the slave rollerbed 160 of Figure 1, without the van 100. Also shown are roller apertures 200. Rollerbed conveyors (not shown in Figure 2; see Figures 3 and 4) can be raised so that they project through the roller apertures 200; each rollerbed conveyor is provided with a respective roller aperture 200. The embodiment of Figure 2 has one set of rollerbed conveyors on one side of the master rollerbed 150 and slave rollerbed 160, and another set of rollerbed conveyors on the other side. Alternative embodiments may have more or fewer sets, or may have different arrangements of rollers.

It is preferred to produce a master rollerbed 150 that is as long as reasonably possible while being short enough to fit into any van 100. The additional length (beyond that of the master rollerbed 150) that is available in larger vans 100 is accommodated by using one or more slave rollerbeds 160. Alternatively, master rollerbeds 160 may be produced in a range of bespoke sizes to fit each of the various types of vans 100.

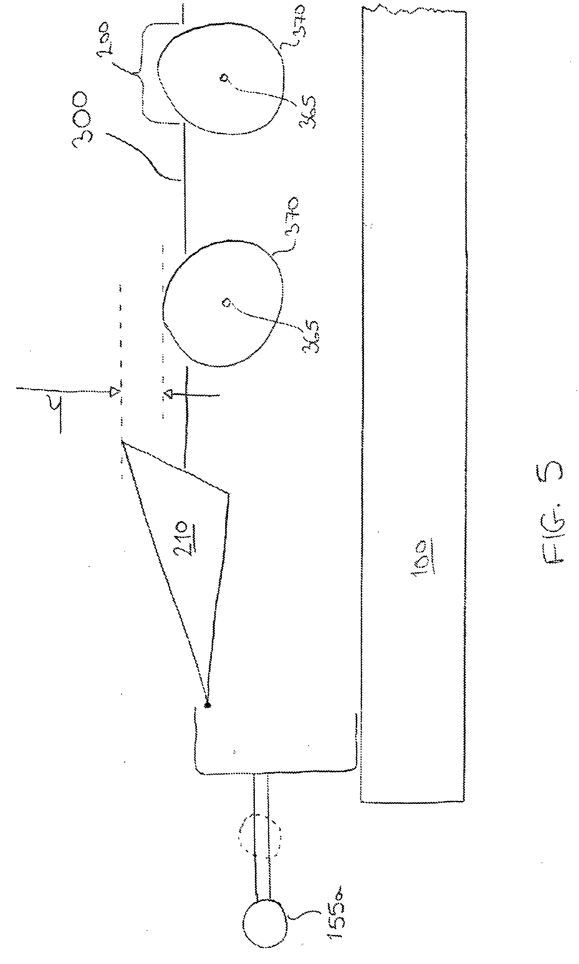

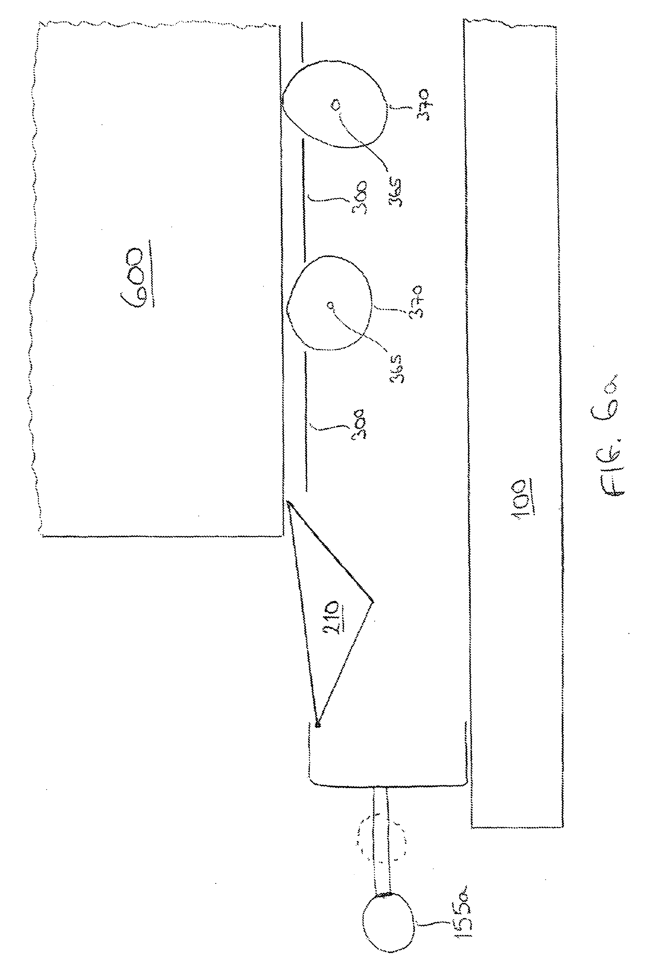

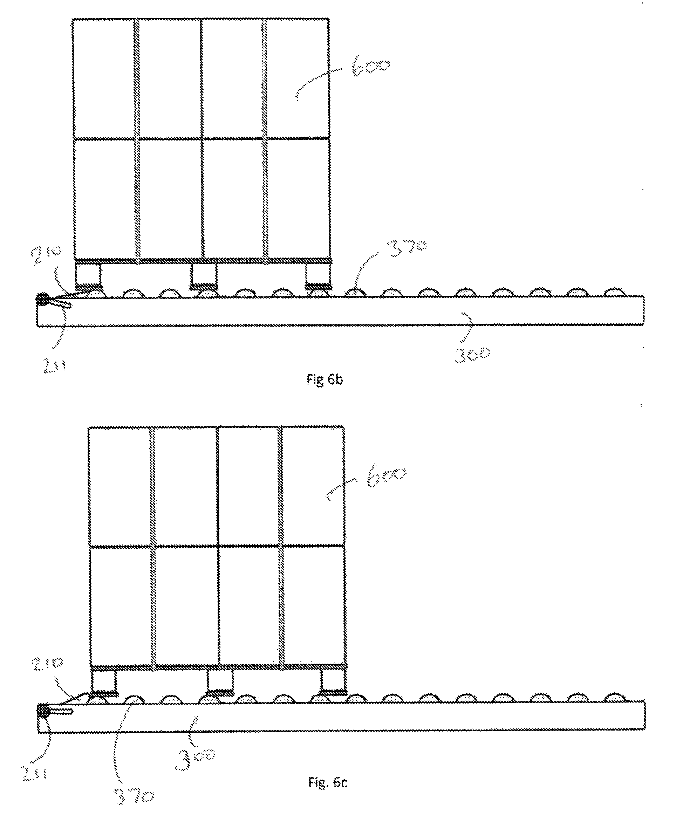

Figure 2 also shows non-return flaps 210. As will be discussed in more detail in connection with Figures 5 and 6, the non-return flaps 210 prevent inadvertent unloading of cargo from the van 100. The non-return flaps 210 are preferably resiliently sprung such that they are lowered into the rollerbed under downward pressure from a load resting on them and are resiliently biased so as to return to the raised position once the load has passed over them.

Figures 3a and 3b show cross-sectional views of Figure 2 in the plane 3-3, with rollers in a lowered position; a portion of the cargo floor of the rear 110 of the van 100 is also shown. Figures 3a and 3b show a substantially flat panel 300; although the panel 300 is substantially flat, it may be embossed with dimples to increase the rigidity of the panel 300. The sides of the panel 300 are formed into "C" sections 310. These C sections 310 increase the longitudinal rigidity of the panel 300. The front and back ends of the panel 300 are also preferably formed into C sections (not visible in Figures 3a and 3b). The panel 300 may be formed of mild steel. A portion of each C section forms a foot which suspends the panel off the floor of the vehicle 100.

In this embodiment, the height of the C sections 310, and thus the height of the panel 300 off the cargo floor of the van 100, is 54 mm. It is preferred that this height be as low as reasonably possible as the height otherwise reduces the volume in the rear 110 of the van 100 that is available for carrying cargo.

Six "top hat" sections 320a - 320f (note that for convenience, Figures 3a and 3b show only the top hat sections 320a and 320f) are used to house six longitudinal air reservoirs 330a - 330f. In this embodiment each reservoir 330 is formed from a respective air sac. The reservoirs 330 are protected by the top hat sections 320, which may be formed of mild steel. The top hat sections 320 are joined (for example by welding or by using mechanical attachments such as bolts) to the panel 300 and further increase the longitudinal rigidity of the panel 300. In this embodiment there are six top hat sections 320 and six reservoirs 330; there may be fewer or more in other embodiments. In alternative embodiments, the reservoirs may comprise rigid containers.

Attached underneath the panel 300 are two roller channels 340a, 340b, one at each side of the master rollerbed 150. The roller channels 340 further increases the longitudinal rigidity of the panel 300 of the master rollerbed 150. Within each roller channel 340 is a respective air sac 350a, 350b. Above each air sac 350 is a respective roller carrier 360a, 360b. The roller carriers 360 support roller axles 365a, 365b which hold rollers 370.

The use of a single panel 300 reduces manufacturing costs as it not necessary to provide the master 150 with a floor - the C sections 310, together with the top hat sections 320 and the roller channels 340, rest on the cargo floor of the rear 110 of the van 100. As well as reducing manufacturing costs, the single panel 300 reduces the weight of the master rollerbed 150 - this maximises the cargo carrying capacity of the van 100 and also improves the ease by which the master rollerbed 150 and slave rollerbed 160 can be installed into a van 100; if the master 150 or slave 160 were too heavy then health and safety at work legislation would prevent a single operator from installing the master rollerbed 150 and/or the slave rollerbed 160. Instead, two people would be needed to install the master rollerbed 150 and/or slave rollerbed 160.

Although the C sections 310 are preferred, some embodiments may omit the longitudinal C sections 310, and/or may omit the front and back C sections. In effect, the C sections 310 define an interior volume that can be regarded as underneath and/or within the flat panel 300; the top hat sections 320 and the roller channels 340 are located within the interior volume.

The panel 300 is perforated by the roller apertures 200, with one aperture 200 for each roller 370.

Figures 3a and 3b show the rollers 370 when retracted beneath the roller apertures 200, i.e. when the air sacs 350 are not inflated.

Figures 4a and 4b show the same view as Figures 3a and 3b, respectively, but with the rollers 370 in a raised position, i.e. when the air sacs 350 are inflated. In this embodiment, the reservoirs 330 are arranged to hold air at a pressure of approximately 2 bar (30 pounds per square inch) and are preferably sized so as to store a sufficient volume of pressurised air to inflate the air sacs 350 on three separate occasions. Thus even when a compressor (see Figure 7 for details of the compressor) has been switched off and is no longer providing compressed air to replenish the reservoirs 330, the air sacs 350 can be inflated.

Figures 3a, 3b and 4a and 4b show cross-sectional views of the master rollerbed 150. In this embodiment of the invention, the cross section of the slave rollerbed 160 (not shown) is similar to that of the master rollerbed 150.

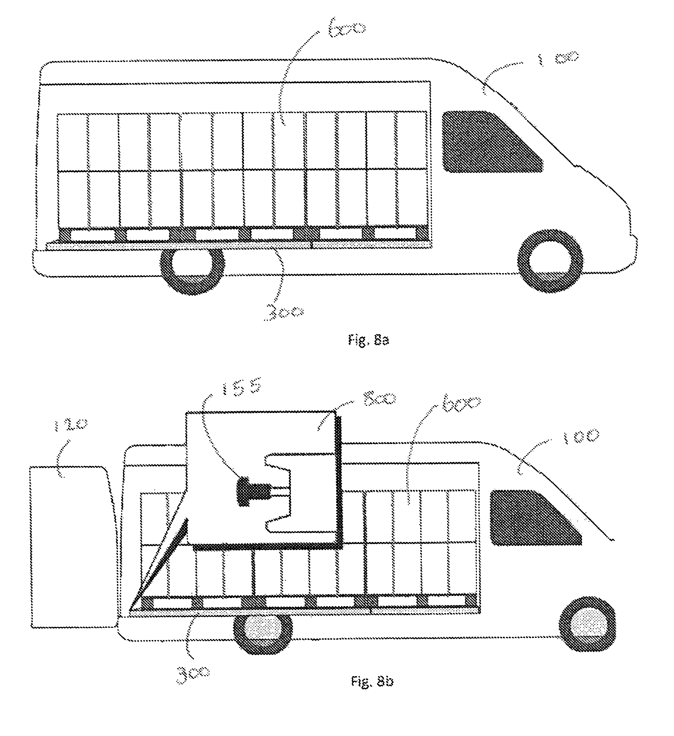

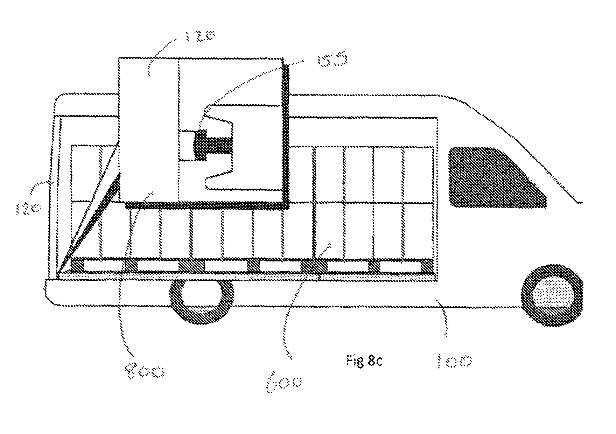

Figure 5 shows a partial cross-sectional view of Figure 2 in the lane 5-5. As shown, the push/pull valves 155 are located at the back of the master rollerbed 150. The push/pull valves are shown in Figure 5 in a pulled out configuration, this causes the rollers 370 to be raised. When the push/pull valves 155 are pushed in (shown in phantom lines), the rollers 370 are lowered below the apertures 200. An advantage of having the rollers 370 lowered, when the push/pull valves 155 are pushed in, is that the doors 120 of the van 100 can be arranged to bear against the push/pull valves 155 (and thus retract the rollers 370) in the event that an operator forgets to push in the push/pull valves 155 before closing the doors 120. This is illustrated in more detail in Figures 8b and 8c.

Figures 6a, 6b and 6c shows the same view as Figure 5 but with a pallet 600. In figure 6a, only a portion of the pallet is shown. The pallet 600 is shown as it is being loaded into the van 100. The rear of the pallet 600 is shown about to clear the non-return flaps 210. As can be seen by comparing the flaps 210 in Figure 6a with Figure 5, in Figure 6a the weight of the pallet 600 pushes down the flaps 210. Once the pallet 600 has cleared the flaps 210, inadvertent unloading of the pallet 600 (e.g. the pallet 600 sliding backwards out of the van 100) is prevented as the tops of the flaps 210 are higher (by a height denoted as "h") than the tops of the rollers 370 and thus the rear of the pallet 600 would come to rest against the flaps 210. In this embodiment the flaps 210 are spring loaded though in alternative embodiments, weights may be used to bias the flaps 210 into position. In other embodiments, one or more flaps 210 may be used instead of two flaps 210.

Strictly speaking, the non-return flaps 210 are only required when the rollers 370 have been raised. This is because when the rollers 370 have been lowered, the pallet 600 would be resting directly on the flat panel 300; it would, due to friction, be difficult to slide the pallet 600 off the flat panel 300. In some embodiments, the flaps 210 are arranged to be recessed (i.e. below the surface of the flat panel 300) when the rollers 370 are lowered; when the rollers 370 are raised, the flaps 210 are urged, for example by a resilient device such as a spring, to project above the flat panel 300 and above the rollers 370.

As can be seen in Figures 6b and 6c, the pallet's weight urges the flap 210 into the body of the panel. The flap 210 is resiliently baised towards a deployed position by a sprung lever 211, although other resilient sprung mechanisms such as springs, materials with elastic properties etc could be used.

Figure 7 shows a schematic diagram of a pneumatic system comprising a compressor 700 controlled by an electrical on/off switch 705. For convenience, the on/off switch is located towards the rear of the master rollerbed 150 so that it is readily accessible by an operator. In this embodiment the compressor 700 is regulated so that it inflates the reservoirs 330a - 330f to 2 bar.

As can be seen, as well as the mechanical couplers 165 between the master rollerbed 150 and slave rollerbed 160, there are (in this embodiment) three pneumatic couplings 711, 712a, 712b. The pneumatic coupling 711 connects the reservoirs 330 to reservoirs 730a - 730f in the slave rollerbed 160. The pneumatic coupling 712a connects the air sac 750a to the air sac 350a. The pneumatic coupling 712b connects the air sac 750b to the air sac 350b.

A gauge 760 allows an operator to monitor the pressure within the reservoirs 330, 730. The gauge is not essential but is preferred to allow an operator to assess how much air remains within the reservoirs, and whether the compressor 700 needs to be switched on.

The push/pull valves 155a, 155b are three port, two position, valves. When in their pulled out position, the valves 155 connect the reservoirs 330, 730 to the air sacs 350 (and air sacs 750a, 750b in the slave rollerbed 160, via the pneumatic couplings 712a, 712b) to inflate the air sacs 350, 750 and raise the rollers 370. When pushed in, the valves 155 connect the air sacs 350, 750 to the atmosphere to allow the air inside the air sacs 350, 370 to be discharged, and to lower the rollers 370. In other embodiments, a single valve may be used instead of the pair of valves 155a, 155b. Also, in other embodiments the valve(s) need not be push/pull valves. For example, electrical switches could be used to control solenoid operated valves.

Although the use of compressed air, together with air sacs, is preferred to raise and lower the rollers 370, in alternative embodiments other arrangements, such as a scissor-type lifting mechanism, may be used instead. It will be appreciated that instead of a compressor, the reservoirs could instead be recharged by a compressed air cylinder or the like that could be connected via a one way valve, discharged into the reservoirs and then disconnected.

In some embodiments, a C section 310 may be formed along only one side of the master rollerbed 150 or the slave rollerbed 160, though it is preferred that a C section 310 be formed along both sides. In other embodiments, a C section may, in addition to or instead of C sections at the sides, be formed at one or at both ends of the master rollerbed 150 or the slave rollerbed 160. In most embodiments the rollerbeds 150, 160 will be rectangular and are provided with four C sections.

Figure 8a illustrates a fully loaded vehicle incorporating an embodiment of the present invention. Figures 8b and 8c show the vehicle during the loading process. The exploded area 800 shows the action of the vehicle door 120 against the push/pull valve 155. As can be seen in Figure 8b, when the door 120 is open, the push/pull valve can be in its pulled state (meaning the rollers 370 are lifted and the contents can be slid back and forth inside the van 100 freely). When the door 120 is closed, as shown in Figure 8c, the door 120 of the van 100 bears against the push/pull valve 155, causing it to move to the pushed state and thus retract the rollers 370. The contents can no longer move back and forth freely in the vehicle.

## Claims

1. A rollerbed for a cargo area of a vehicle comprising:
a single substantially flat panel (300) and "C" sections (310) formed along one or more sides, wherein a plurality of apertures (200) are defined in the substantially flat panel; and
a plurality of rollers (150, 160) movable between a lowered position and a raised position, wherein in the raised position the rollers project through the apertures, and wherein in the lowered position the rollers do not project through the apertures;
wherein the width of the panel extends substantially across the spacing between the wheel wells (115) of the cargo area of the vehicle (100), the panel including restraining means (170) for restraining movement of the panel when mounted within the cargo area of the vehicle.

2. A rollerbed according to claim 1, wherein each "C" section has a height perpendicular to the plane of the substantially flat panel that is greater than or equal to the diameter of the rollers, each "C" section further comprises a foot whereby when the rollerbed is placed on a surface, the foot of the "C" section suspends the substantially flat panel and the plurality of rollers in the lowered position above the surface.

3. A rollerbed according to claim 1 or 2, further comprising:
one or more roller channels (340, 340a), wherein the one or more roller channels are secured to the substantially flat panel such that rigidity of the substantially flat panel is increased.

4. A rollerbed according to claim 1, 2 or 3, comprising:
one or more gas sacs (350, 350a) coupled to one or more gas reservoirs (330a - 330f), wherein the one or more sacs are inflatable via gas from the gas reservoirs to move the rollers between the lowered position and the raised position.

5. A rollerbed according to any preceding claim, comprising:
one or more top hat sections (320a - 320f), wherein the one or more top hat sections are secured to the substantially flat panel such that the rigidity of the substantially flat panel is increased.

6. A rollerbed according to claim 5 when dependent on claim 4, wherein the one or more reservoirs are housed in the one or more top hat sections.

7. A rollerbed according to claim 4, 5 or 6, further comprising:
a compressor (700) arranged to charge the one or more gas reservoirs.

8. A rollerbed according to any preceding claim, comprising:
one or more non-return flaps (210), wherein the one or more non-return flaps are urged, at least when the rollers are in the raised position, above the rollers so as impede the unloading of goods (600).

9. A rollerbed according to any preceding claim, wherein the restraining means comprises one or more pins.

10. A rollerbed according to any preceding claim, comprising:
a control device, such as a push/pull valve (155a, 155b), for selecting a lowered or a raised position for the rollers.

11. A rollerbed according to claim 10, wherein the control device is arranged for interaction with a vehicle door (120), such that when the vehicle door is closed then the rollers are lowered.

12. A rollerbed according to any preceding claim, wherein the rollerbed is a master rollerbed (150), comprising:
one or more mechanical couplers (165) for attaching the master rollerbed to a slave rollerbed (160).

13. A rollerbed according to any preceding claim, wherein the rollerbed is a master rollerbed, comprising:
one or more electrical and/or pneumatic couplers (711, 712a, 712b) for connecting the master rollerbed to a slave rollerbed such that rollers of the slave rollerbed imitate rollers of the master rollerbed.

14. A rollerbed according to any preceding claim, having either two or four "C" sections.

15. A method of fitting a rollerbed to a vehicle (100), comprising the steps of:
providing a rollerbed comprising: a single substantially flat panel (300) having "C" sections (310) formed along one or more sides, wherein a plurality of apertures (200) are defined in the substantially flat panel; and a plurality of rollers (150, 160) movable between a lowered position and a raised position, wherein in the raised position the rollers project through the apertures, and wherein in the lowered position the rollers do not project through the apertures; wherein the width of the panel extends substantially across the spacing between the wheel wells (115) of the cargo area of the vehicle (100);
providing pins (170);
fitting the pins to the rollerbed such that the rollerbed is restrained in the vehicle.

## Patentansprüche

1. Rollenbahn für eine Ladefläche eines Fahrzeugs mit:
einer einzelnen im Wesentlichen flachen Platte (300) und "C" förmigen Abschnitten (310), welche längs einer oder mehrerer Seiten ausgebildet sind,
wobei mehrere Öffnungen (200) in der im Wesentlichen flachen Platte ausgebildet sind; und
mehrere Rollen (150, 160), die zwischen einer abgesenkten Position und einer angehobenen Position beweglich sind,
wobei in der angehobenen Position die Rollen durch die Öffnungen ragen, und
wobei in der abgesenkten Position die Rollen nicht durch die Öffnungen ragen;
wobei die Breite der Platte sich im Wesentlichen über den Abstand zwischen den Radschachtbereichen (115) der Ladefläche des Fahrzeugs (100) erstreckt,
wobei die Platte eine Begrenzungseinrichtung (170) zur Begrenzung der Bewegung der Platte einschließt, wenn diese innerhalb der Ladefläche des Fahrzeugs befestigt ist.

2. Rollenbahn nach Anspruch 1,
in welcher jeder "C" förmige Abschnitt eine Höhe senkrecht zur Ebene der im Wesentlichen flachen Platte besitzt, welche größer oder gleich dem Durchmesser der Rollen ist, wobei jeder "C" förmige Abschnitt außerdem einen Fuß aufweist, wobei dann, wenn die Rollenbahn auf einer Oberfläche platziert ist, der Fuß des "C" förmigen Abschnittes die im Wesentlichen flache Platte und die mehreren Rollen in der abgesenkten Position oberhalb der Oberfläche frei aufhängt.

3. Rollenbahn nach Anspruch 1 oder 2,
außerdem aufweisend:
eine oder mehrere Rollenkanäle (340, 340a), wobei die einen oder mehreren Rollenkanäle an der im Wesentlichen flachen Platte so befestigt sind, dass die Steifigkeit der im Wesentlichen flachen Platte erhöht wird.

4. Rollenbahn nach Anspruch 1, 2 oder 3,
aufweisend:
einen oder mehrere Gas-Säcke (350, 350 a) verbunden mit einem oder mehreren Gasspeichern (330 a bis 330 f), wobei der eine oder die mehreren Säcke mittels Gas aus den Gasspeichern aufblasbar sind, um die Rollen zwischen der abgesenkten Position und der angehobenen Position zu bewegen.

5. Rollenbahn nach einem der vorstehenden Ansprüche,
aufweisend:
ein oder mehrere Hutprofile (320 a bis 320 f), wobei das eine oder die mehreren Hutprofile an der im Wesentlichen flachen Palette derart befestigt sind, dass die Steifheit der im Wesentlichen flachen Palette erhöht wird.

6. Rollenbahn nach Anspruch 5,
wenn dieser von Anspruch 4 abhängt, in welcher der eine oder die mehreren Speicher in dem einen oder den mehreren Hutprofilen untergebracht sind.

7. Rollenbahn nach Anspruch 4, 5 oder 6 außerdem aufweisend:
einen Kompressor (700), angeordnet zum Laden des einen oder der mehreren Gasspeicher.

8. Rollenbahn nach einem der vorstehenden Ansprüche,
aufweisend:
eine oder mehrere Rückschlagklappen (210), wobei die eine oder die mehreren Rückschlagklappen zumindest dann, wenn die Rollen in ihrer angehobenen Position sind, über die Rollen gedrückt sind, um so das Entladen von Waren (600) zu verhindern.

9. Rollenbahn nach einem der vorstehenden Ansprüche,
in welcher die Begrenzungseinrichtung einen oder mehrere Stifte aufweist.

10. Rollenbahn nach einem der vorstehenden Ansprüche,
aufweisend: ein Steuergerät, wie beispielsweise ein Gegentakt-Ventil (155 a, 155b), zum Auswählen der abgesenkten oder der angehobenen Position für die Rollen.

11. Rollenbahn nach Anspruch 10,
in welcher das Steuergerät für ein Zusammenwirken mit einer Fahrzeugtür (120) angeordnet ist,
damit dann, wenn die Fahrzeugtür geschlossen ist, die Rollen abgesenkt werden.

12. Rollenbahn nach einem der vorstehenden Ansprüche,
in welcher die Rollenbahn eine steuernde Rollenbahn (150) ist, aufweisend:
einen oder mehrere mechanische Koppler (165) zum Anbringen der steuernden Rollenbahn an einer gesteuerten Rollenbahn (160).

13. Rollenbahn nach einem der vorstehenden Ansprüche,
in welcher die Rollenbahn eine steuernde Rollenbahn ist, aufweisend:
einen oder mehrere elektrische und/oder pneumatische Koppler (711, 712a, 712b) zum Verbinden der steuernden Rollenbahn mit einer gesteuerten Rollenbahn derart, dass die Rollen der gesteuerten Rollenbahn die Rollen der steuernden Rollenbahn nachahmen.

14. Rollenbahn nach einem der vorstehenden Ansprüche,
mit entweder zwei oder vier "C" förmigen Abschnitten.

15. Verfahren zum Einpassen einer Rollenbahn auf ein Fahrzeug (100), aufweisend die Schritte von:
des Vorsehen einer Rollenbahn aufweisend:
eine im Wesentlichen flache Platte (300) mit "C"-förmigen Abschnitten (310), welche längs einer oder mehrerer Seiten ausgebildet sind,
wobei mehrere Öffnungen (200) in der im Wesentlichen flachen Platte ausgebildet sind; und mehrere Rollen (150, 160), die zwischen einer abgesenkten Position und einer angehobenen Position beweglich sind,
wobei in der angehobenen Position die Rollen durch die Öffnungen ragen, und
wobei in der abgesenkten Position die Rollen nicht durch die Öffnungen ragen;
wobei die Breite der Platte sich im Wesentlichen über den Abstand zwischen den Radschachtbereichen (115) und der Ladefläche des Fahrzeugs (100) erstreckt;
das Vorsehen von Stiften (170);
das Einpassen der Stifte auf der Rollenbahn derart, dass die Rollenbahn in dem Fahrzeug begrenzt ist.

## Revendications

1. Un tapis à rouleaux pour une zone de chargement d'un véhicule comprenant :
un unique panneau (300) sensiblement plat et des sections en « C » (310) formées le long d'un ou plusieurs côtés, dans lequel une pluralité d'ouvertures (200) sont définies dans le panneau sensiblement plat ; et
une pluralité de rouleaux (150,160) mobiles entre une position basse et une position haute, dans lequel dans la position haute les rouleaux font saillie au travers des ouvertures, et dans lequel dans la position basse les rouleaux ne font pas saillie au travers des ouvertures ;
dans lequel la largeur du panneau s'étend sensiblement au travers de l'espace entre les passages de roues (115) de la zone de chargement du véhicule (100), le panneau incluant des moyens de retenue (170) pour contenir les mouvements du panneau lorsqu'il est monté dans la zone de chargement du véhicule.

2. Un tapis à rouleaux selon la revendication 1, dans lequel chaque section en « C » a une hauteur perpendiculaire au plan du panneau sensiblement plat qui est plus grande ou égale au diamètre des rouleaux, chaque section en « C » comprend en outre un pied de façon que lorsque le tapis à rouleaux est placé sur une surface, le pied de la section en « C » suspend le panneau sensiblement plat et la pluralité de rouleaux dans la position basse au-dessus de la surface.

3. Un tapis à rouleaux selon la revendication 1 ou 2, comprenant en outre :
une ou plusieurs rainures à rouleau (340,340a), dans lequel la ou les rainures à rouleau sont solidarisées au panneau sensiblement plat de façon à augmenter la rigidité du panneau sensiblement plat.

4. Un tapis à rouleaux selon la revendication 1, 2 ou 3, comprenant :
un ou plusieurs sacs à gaz (350,350a) reliés à un ou plusieurs réservoirs de gaz (330a-330f), dans lequel le ou les sacs sont gonflables par le gaz issu des réservoirs de gaz pour déplacer les rouleaux entre la position basse et la position haute.

5. Un tapis à rouleaux selon l'une quelconque des revendications précédentes, comprenant :
une ou plusieurs sections en « haut de forme » (320a-320f), dans lequel la ou les sections en « haut de forme » sont solidarisées au panneau sensiblement plat de façon à augmenter la rigidité du panneau sensiblement plat.

6. Un tapis à rouleaux selon la revendication 5 prise en dépendance de la revendication 4, dans lequel le ou les réservoirs sont logés dans la ou les sections en « haut de forme ».

7. Un tapis à rouleaux selon la revendication 4, 5 ou 6, comprenant en outre :
un compresseur (700) conçu pour charger le ou les réservoirs de gaz.

8. Un tapis à rouleaux selon l'une quelconque des revendications précédentes, comprenant :
un ou plusieurs volets anti-retour (210), dans lequel le ou les volets anti-retour sont poussés, au moins lorsque les rouleaux sont dans la position haute, au-dessus des rouleaux de façon à empêcher le déchargement de marchandises (600).

9. Un tapis à rouleaux selon l'une quelconque des revendications précédentes, dans lequel les moyens de retenue comprennent un ou plusieurs axes.

10. Un tapis à rouleaux selon l'une quelconque des revendications précédentes, comprenant :
un dispositif de contrôle, tel une valve push-pull (155a,155b), pour sélectionner une position basse ou une position haute pour les rouleaux.

11. Un tapis à rouleaux selon la revendication 10, dans lequel le dispositif de contrôle est conçu pour interagir avec une porte de véhicule (120), de façon que les rouleaux sont abaissés lorsque la porte du véhicule est fermée.

12. Un tapis à rouleaux selon l'une quelconque des revendications précédentes, dans lequel le tapis à rouleaux est un tapis à rouleaux maître (150), comprenant :
un ou plusieurs coupleurs mécaniques (165) pour attacher le tapis à rouleaux maître à un tapis à rouleaux esclave (160).

13. Un tapis à rouleaux selon l'une quelconque des revendications précédentes, dans lequel le tapis à rouleaux est un tapis à rouleaux maître, comprenant :
un ou plusieurs coupleurs électriques et/ou pneumatiques (711,712a,712b) pour connecter le tapis à rouleaux maître à un tapis à rouleaux esclave de façon que les rouleaux du tapis à rouleaux esclave imitent les rouleaux du tapis à rouleaux maître.

14. Un tapis à rouleaux selon l'une quelconque des revendications précédentes, ayant soit deux, soit quatre sections en « C ».

15. Une méthode d'équipement d'un véhicule (100) avec un tapis à rouleaux, comprenant les étapes de :
fourniture d'un tapis à rouleaux comprenant : un unique panneau (300) sensiblement plat ayant des sections en « C » (310) formées le long d'un ou plusieurs côtés, dans lequel une pluralité d'ouvertures (200) sont définies dans le panneau sensiblement plat ; et une pluralité de rouleaux (150,160) mobiles entre une position basse et une position haute, dans lequel dans la position haute les rouleaux font saillie au travers des ouvertures, et dans lequel dans la position basse les rouleaux ne font pas saillie au travers des ouvertures ; dans lequel la largeur du panneau s'étend sensiblement au travers de l'espace entre les passages de roues (115) de la zone de chargement du véhicule (100) ;
fourniture d'axes (170) ;
fixation des axes au tapis à rouleaux de façon que le tapis à rouleaux est retenu dans le véhicule.
